# EUROPEAN PATENT APPLICATION

(11) **EP 1 067 298 A2**
(43) Date of publication of application: **10.01.2001**
(21) Application number: 00303714.0
(22) Date of filing: 03.05.2000
(51) Int. Cl.: F16B 5/00

(54) **A composite component**

(30) Priority: 05.07.1999 GB 9915722
(71) Applicant: VOSPER THORNYCROFT (UK) LTD., Woolston Southampton S019 9RR (GB)
(72) Inventor: Geach, Peter William, East Cowes, Isle of Wight PO32 6Al (GB)
(74) Representative: Cheyne, John Robert Alexander Mackenzie

(57) **Abstract**

A composite component, for example for use in ship building, comprises a composite panel 4 to which is secured a metal extension 2. The metal extension 2 has a groove within which a rib 28 at an edge region of the composite panel 4 is fitted. The groove has an interior width which is larger than the width of the mouth of the groove, to prevent separation of the metal extension 2 from the composite panel 4. The metal extension 2 enables the composite component to be secured to metal parts, for example for the hull of a ship, by welding.

## Description

This invention relates to a composite component and is particularly, although not exclusively, concerned with such a component for use in the construction of ships, in which the composite component forms part of the superstructure of the ship.

It is becoming increasingly common, primarily for weight-saving reasons, for composite materials to be used in the fabrication of the superstructure of ships. This leads, however, to difficulties in securing the composite components to the hull of the ship, made from steel or other metal.

EP-A-0521793 discloses the incorporation of a metal strip at an edge of a composite component. The composite component can then be secured to the hull of a ship to form part of the superstructure by welding the metal strip to a metal part of the hull.

In the technique disclosed in EP-A-0521793, the composite component comprises two outer skins on each side of a core. At the edge region receiving the metal strip, the outer skins project beyond the core, and are bonded to opposite faces of the strip.

In use of such a structure, the bond between the metal strip and the outer skins of the composite component can fail, leading to separation between the metal strip and the rest of the composite component.

According to the present invention, there is provided a composite component which comprises a composite panel having an edge region which is provided with a metal extension having a groove which has an interior width which is greater than the width of the mouth of the groove, and the edge region of the composite panel having a rib which is accommodated within the groove and has a width greater than the width of the mouth of the groove.

With such a structure, the rib and the groove provide a mechanical lock which prevents separation of the metal extension from the composite panel.

Preferably, the rib makes intimate contact with the interior of the groove. In a preferred embodiment, the rib is bonded to the internal surface of the groove. The composite panel may have a core, at least at its edge region, and the core may include a wedge arrangement which acts to spread the walls of the rib apart so as to expand the rib within the groove.

The internal surface of the groove and the external surface of the rib may have any suitable profile, but in one preferred embodiment they are part-circular in cross-section. The profile of the rib may be formed in situ within the groove.

If the composite panel comprises a core, this may be situated between two layers of fibre-reinforced plastics. These layers may comprise a single continuous layer which extends around the rib and so defines the outer surface of the rib. An electrically conductive layer may be provided on at least one of the outer layers to provide earthing between the composite panel and the metal extension. In use, for example in the construction of a ship, the metal extension may be connected by welding to a further metal structure, such as a steel plate or beam forming part of the hull of a ship.

Another aspect of the present invention provides a method of fabricating a structure as defined above, in which method the rib of the composite panel is formed in situ within the groove of the metal extension.

For a better understanding of the present invention, and to show how it may be carried into effect, reference will now be made, by way of example, to the accompanying drawings, in which:-
Figure 1 is a cross-sectional view of a structure comprising a composite component;
Figure 2 corresponds to Figure 1 but illustrates an alternative embodiment;
Figure 3 also corresponds to Figure 1 but shows a third embodiment;
Figure 4 shows a component similar to that of Figure 1 welded to a further structure;
Figure 5 shows two components of which the metal extensions are connected together;
Figure 6 shows two components of which the metal extensions are connected together at right angles;
Figure 7 corresponds to Figure 1 but shows a fourth embodiment.

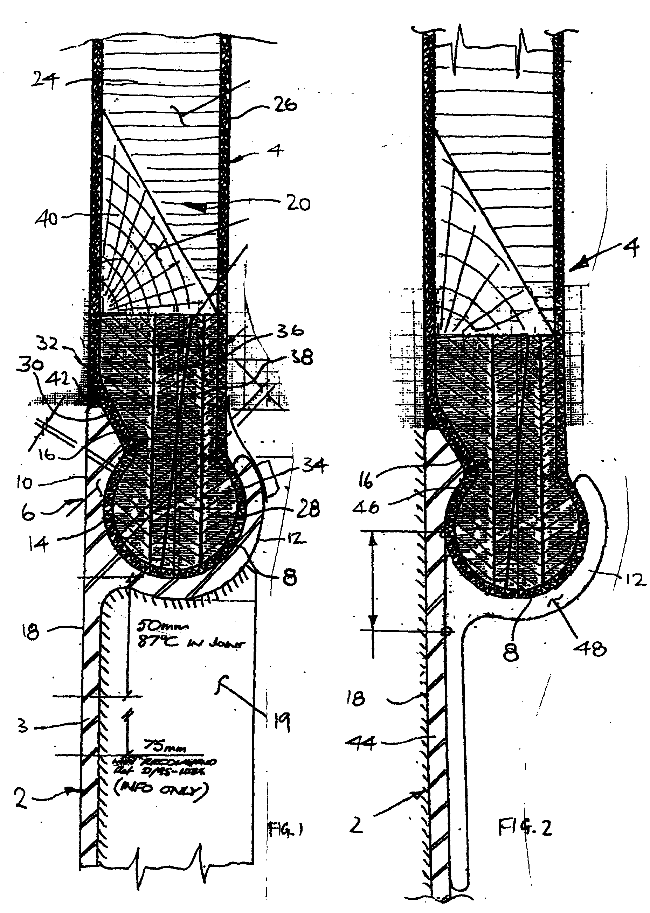

The component shown in Figure 1 comprises a composite panel 4 provided with a metal (for example, steel) extension 2. The component is shown only in the region of interconnection of the panel 4 and the extension 2; they extend, respectively, below and above the part shown in Figure 1.

The metal extension 2 comprises a main planar part 3 which has, at its upper edge region 6, in the orientation shown in Figure 1, a groove 8. This groove is defined by a projection 10 which is a continuation of the main part 3 of the extension 2, and by a web 12 which extends from the main part 3 over an angle of about 180°. The web 12 shown in the Figures is arcuate, but other shapes, such as oval, can be used. The projection 10 has a concave surface 14 which is a continuation of the inner surface of the web 12. The combined surface provided by the surface 14 of the projection 10 and the web 12 extends over an angle of approximately 270°.

An oblique surface 16 extends from the end of the concave surface 14 away from the web 12, and is connected by a radiused surface to a planar front surface 18 of the extension 2.

The composite panel 4 comprises a core 20 made up of blocks 32, 34, 36, 38, 40 of a hard material (such as wood or a pultrusion of fibre reinforced material) at the edge region of the panel 4 and a lightweight material (such as balsa wood, polymer foam or honeycomb material) over the main extent of the panel 4. A skin 26 extends over the surface of the core 20. The skin 26 is a fibre reinforced resin material, and extends continuously over both faces of the core 20 and over the edge region of the panel 4 which mates with the metal extension 2. At this edge region the panel 4 has a rib 28 of a form corresponding to the shape and size of the groove 8 of the metal extension 2. The rib 28 is part-spherical in the embodiment shown. The panel 4 also has an oblique surface 30 corresponding to the oblique surface 16 of the metal extension 2. As will be discussed below, the rib 28 is formed in situ within the groove 8 and is bonded to the metal extension.

It is desirable in some applications for the panel 4 to be electrically conductive, for example in order to provide electrical earthing. Consequently, the outer face of the skin 26, of one or both sides of the component 4, may be provided with a copper sheath which makes electrical contact with the metal extension 2.

The metal extension 2 is shown as including a series of transverse webs 19 at spacings of, for example, 500mm to coincide with the spacing of deck beams. These webs 19, if provided, are welded to the main part 3 and to the web 12.

The component shown in Figure 1 may be fabricated by any suitable technique for manufacturing fibre reinforced materials. As an example, a vacuum assisted resin impregnation technique such as that described in GB-A-2257938 may be used. Whatever technique is used, it is desirable for the rib 28 to be formed in situ in the groove 8. Thus, the metal extension 2 is used as part of the mould for forming the composite panel 4. A mat of suitable reinforcing fibre, such as glass fibre or carbon fibre, is laid on the surface, over the oblique surface 16 and around the interior surface 14 of the groove 8. If a vacuum assist resin impregnation technique is used, the blocks 32, 34, 36, 38 which extend into the groove 8 are inserted. It will be appreciated that these blocks include a pair of outer blocks 32, 34 which have shapes corresponding to the associated parts of the groove 8 and the oblique surface 16, and two wedged blocks 36, 38 which fit between the blocks 32 and 34. Initially, the blocks 32 and 34 are inserted, and then the blocks 36 and 38 are fitted between them, the block 36 being driven home in order to force the blocks 32 and 34 apart in order to press the mat into intimate contact with the groove 8.

A stress-relieving block 40 of triangular cross-section is then abutted against the blocks 32, 34, 36, 38, followed by the lightweight core material 24 comprising the rest of the core 20. When all components of the core 20 are in place, the remainder of the fibre mat is laid over the core 20. The fibre mat is then impregnated with resin and the structure is left while the resin cures, leaving the composite panel 4 securely fixed to the metal extension 2. If electrical conductivity is required, the copper sheath may be applied as a layer with the mat so as to be bonded to the remainder of the composite panel 4 when the resin cures.

A fillet 42 may be applied at the junction in the surface 18 between the metal component 2 and the composite component 4 in order to provide a continuous surface for the structure as a whole.

The structure shown in Figure 1 is particularly suitable for use in ship building, since the metal extension 2 can be secured to hull plates or beams by welding, while the structure as a whole has the advantages of a composite material for example lightness in weight. It will be appreciated that the groove 8 has an internal width which is substantially larger than the width of the mouth of the groove between the free end of the web 12 and the point at which the concave surface 14 meets the oblique surface 16. This provides a mechanical lock between the metal extension 2 and the composite panel 4 which complements the adhesive bonding between the rib 28 and the groove 8 to resist separation of these components under loads tending to pull them apart. The structure thus enables a high-integrity connection to be made between the composite panel 4 and the hull to which it is secured by the intermediary of the metal extension 2.

It will be appreciated that, in the component of Figure 1, the web 12 is formed integrally with the main part 3 of the metal extension 2. Figure 2 shows an alternative structure in which the extension 2 is fabricated from two parts, namely a plate 44, which provides the oblique surface 16 and a short concave portion 46, and an attached part 48 having the web 12, and so providing the major part of the inner surface of the groove 8.

The attached part 48 may, for example, be cast or fabricated, and may be secured to the plate 44 by any suitable means, for example by a combination of bonding and a bolted connection, or by welding.

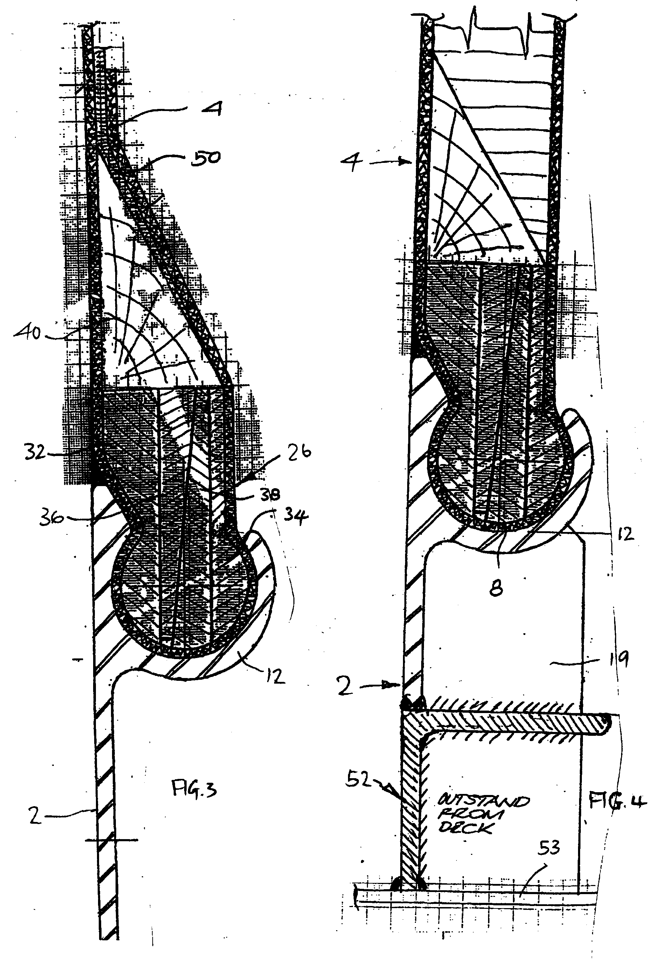

Figure 3 shows a structure which is suitable if the composite panel 4 needs only to be relatively thin, with a panel thickness similar to that of the metal extension 2. In this embodiment, the connection between the metal extension 2 and the composite panel 4 is the same as that of the embodiment of Figure 1. However, instead of the core 24, a transition layer 50 of fibre reinforced plastics is laid over the triangular cross-section block 40 to provide a panel thickness of the required value.

In some applications, the metal extension 2 may be welded directly to deck panels. However, Sometimes the deck panels may have been outfitted on the side away from that to which the metal extension is to be welded. In such circumstances, the deck panel may be equipped with fittings and materials which will be affected by the heat of welding. To avoid this, angle sections such as that shown at 52 in Figure 4 are welded to the deck 53 before outfitting. The composite component can then be welded to the angle section 52 without damage to the fittings and materials on the underside of the deck 53.

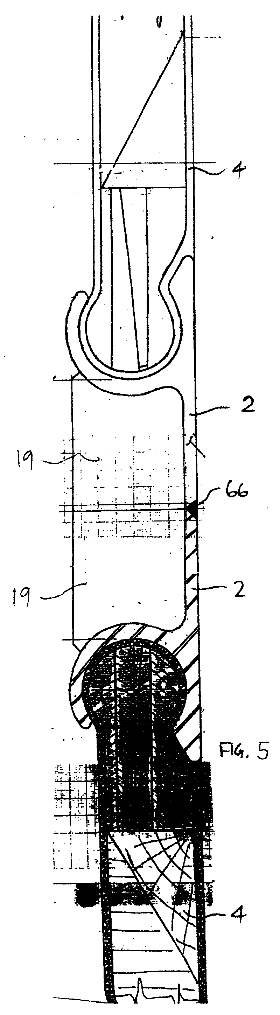

Figure 5 shows two components as described with reference to Figure 1 which are joined together by welding together the metal extensions 4 at 66. The resulting metal member can serve as an upright or horizontal member in a frame structure to impart rigidity to the fabricated composite assembly.

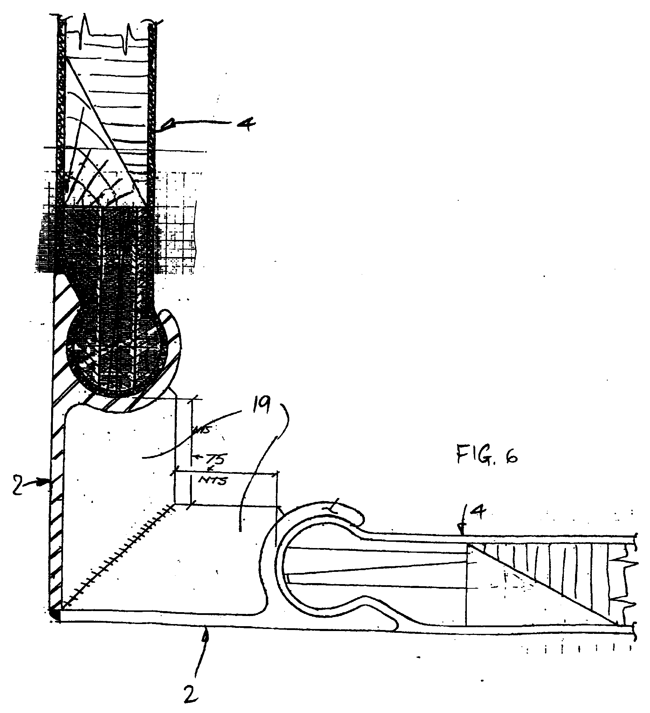

Figure 6 corresponds to Figure 5, but shows the components interconnected at an angle by appropriate shaping of the webs 19.

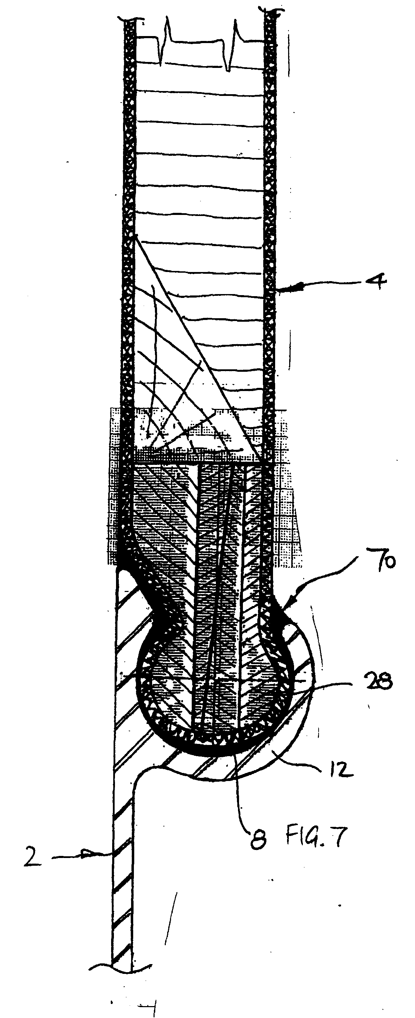

Figure 7 corresponds to Figure 1 but illustrates the optional incorporation of a shock-absorbing rubber layer between the composite panel 4 and the metal extension 2. This layer is represented in Figure 9 by an elastomeric layer 70. This layer is applied to the inner surface of the groove 8 before the fibre mat used to form the skin 26 of the composite component 4 is applied. Even with the elastomeric layer 70 in place, the maximum width of the rib 28 is larger than the width of the mouth of the groove 8, so that it is not possible, after manufacture of the structure, to separate the parts 2 and 4 by pulling the rib 28 out of the groove 8. This construction provides the beneficial effect that the, composite superstructure can be isolated from vibration and shock generated within the hull of the vessel.

In all embodiments, the distance over which the metal extension 2 extends from the composite panel 4 is preferably sufficiently large to avoid excessive conduction of heat during welding from the free edge of the metal extension 2 to the composite material within the groove 8. This distance is preferably at least 50mm and more preferably at least 75mm.

## Claims

1. A composite component which comprises a composite panel having an edge region which is provided with a metal extension having a groove which has an interior width which is greater than the width of the mouth of the groove, and the edge region of the composite panel having a rib which is accommodated within the groove and having a width greater than the width of the mouth of the groove.

2. A component as claimed in claim 1, in which the rib intimately contacts the interior surface of the groove.

3. A component as claimed in claim 1 or 2, in which the rib is bonded to the interior surface of the groove.

4. A component as claimed in claim 3, in which the rib is bonded to the interior surface of the groove by an elastomeric layer.

5. A component as claimed in any one of the preceding claims, in which the rib and the groove have a part-cylindrical form.

6. A component as claimed in any one of the preceding claims, in which the metal extension comprises a planar main part and a groove attachment secured to the main part, the groove being defined between the main part and the groove attachment.

7. A component as claimed in any one of the preceding claims, in which the profile of the edge region of the composite panel is formed in situ within the groove.

8. A component as claimed in any one of the preceding claims, in which the composite panel comprises a core disposed between outer layers of fibre reinforced plastics.

9. A component as claimed in claim 8, in which the outer layers of the composite panel are formed from a single web of material which extends around the edge region of the composite panel.

10. A component as claimed in any one of the preceding claims, in which a conductive material is provided on at least one outer face of the composite panel, the conductive material being in electrical contact with the metal extension.

11. A component as claimed in any one of the preceding claims, in which, at the edge region of the composite panel, the core comprises wedge elements for expanding the edge region within the groove.

12. A composite component substantially as described herein with reference to, and as shown in, any one of the accompanying drawings.

13. A structure fabricated from metal components and including at least one composite component in accordance with any one of the preceding claims, the composite component being fixed to a metal component of the structure by a weld between the metal extension and the metal component of the structure.

14. A structure as claimed in claim 13, which is a ship, the composite component forming part of the superstructure of the ship.
